# EUROPÄISCHE PATENTSCHRIFT

(11) **EP 2 145 083 B1**
(45) Veröffentlichungstag und Bekanntmachung des Hinweises auf die Patenterteilung: **10.04.2013**
(21) Anmeldenummer: 08716971.0
(22) Anmeldetag: 20.02.2008
(51) Int. Cl.: F01N 3/20

(54) **SCR-VORRICHTUNG ZUR SELEKTIVEN KATALYTISCHEN REDUKTION DES ABGASES EINER BRENNKRAFTMASCHINE**
SCR DEVICE FOR THE SELECTIVE, CATALYTIC REDUCTION OF THE EXHAUST GAS OF AN INTERNAL COMBUSTION ENGINE
DISPOSITIF SCR DE RÉDUCTION CATALYTIQUE SÉLECTIVE DES GAZ D'ÉCHAPPEMENT D'UN MOTEUR À COMBUSTION INTERNE

(30) Priorität: 10.04.2007 DE 102007016858
(43) Veröffentlichungstag der Anmeldung: 20.01.2010
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2008/052062
(87) Internationale Veröffentlichungsnummer: WO 2008/122460

(56) Entgegenhaltungen:
- EP-A- 1 561 626
- DE-A1- 19 841 770
- DE-A1-102004 051 746
- DE-A1-102006 027 487
- JP-A- 2006 144 562
- US-A1- 2003 192 599

## Beschreibung

### Stand der Technik

Die Erfindung betrifft eine SCR-Vorrichtung zur selektiven katalytischen Reduktion des Abgases einer Brennkraftmaschine nach dem Oberbegriff des Anspruchs 1.

Es ist beispielsweise aus der DE 103 24 482 A1 und aus der EP 1 561 626 A2 bekannt, dass der Stickoxidgehalt im Abgas einer Brennkraftmaschine durch eine selektive katalytische Reduktion (SCR) verringert werden kann. Dazu wird dem Abgas als Wirkstoff entweder eine unmittelbar reduzierend wirkende Substanz wie Ammoniak oder ein Vorprodukt, welches erst im Abgas reduzierende Substanzen freisetzt, zugeführt. Als Vorprodukt kann beispielsweise eine Harnstoff-Wasser-Lösung verwendet werden. Ammoniak wird bei der selektiven katalytischen Reduktion mit Stickstoffmonoxid und Stickstoffdioxid zu molekularem Stickstoff und Wasser umgewandelt. Die selektive katalytische Reduktion findet in einem SCR-Katalysator statt.

Die Einbringung beispielsweise der Harnstoff-Wasser-Lösung in das Abgas erfolgt über eine SCR-Injektionseinrichtung. Gespeichert wird der Wirkstoff, beispielsweise die Harnstoff-Wasser-Lösung, in einem Vorratsbehälter. Ein Füllstandssensor ist am Vorratsbehälter angeordnet und überwacht den aktuellen Füllstand des Wirkstoffs im Vorratsbehälter. Im Vorratsbehälter ist ein topfartiger Einsatz angeordnet, der zur Unterdrückung einer Schwappbewegung des Wirkstoffes, insbesondere im Bereich jener Stelle, an der der Wirkstoff vom Vorratsbehälter abströmt, dient.

### Offenbarung der Erfindung

Aufgabe der vorliegenden Erfindung ist es, eine SCR-Vorrichtung der eingangs genannten Art so weiter zu entwickeln, dass sie möglichst zuverlässig arbeitet und preiswert hergestellt werden kann.

Diese Aufgabe wird durch eine SCR-Vorrichtung mit den Merkmalen des Anspruchs 1 gelöst. Vorteilhafte Weiterbildungen der Erfindung sind in Unteransprüchen angegeben. Darüber hinaus finden sich erfindungswesentliche Merkmale auch in der nachfolgenden Beschreibung und der Zeichnung, wobei diese Merkmale sowohl in Alleinstellung als auch in Kombination für die Erfindung wesentlich sein können, ohne dass hierauf jeweils explizit hingewiesen wird.

Die erfindungsgemäße SCR-Vorrichtung hat den Vorteil, dass der Füllstandssensor aufgrund seiner Positionierung am topfartigen Einsatz unempfindlicher gegen Schwappbewegungen des im Vorratsbehälter vorhandenen Wirkstoffes ist. Hierdurch wird die Zuverlässigkeit der Füllstandsmessung erhöht. Darüber hinaus kann der Füllstandssensor vorab am topfartigen Einsatz befestigt werden, was die Montage erleichtert und Kosten spart.

Die erfindungsgemäße SCR-Vorrichtung zeichnet sich dadurch aus, dass der Einsatz eine zum Vorratsbehälter hin offene Aufnahmeöffnung aufweist, in der der Füllstandssensor aufgenommen ist. Dem liegt die Überlegung zugrunde, dass beispielsweise eine Harnstoff-Wasser-Lösung bei im Betrieb vorkommenden Temperaturen gefrieren kann. Durch die erfindungsgemäße Maßnahme wird der Füllstandssensor vor Eisstücken geschützt, die sich beispielsweise durch Vibrationen lösen und ihn beschädigen könnten.

Der Vorratsbehälter weist einen Innenraum auf, in dem der topfartige Einsatz angeordnet ist, wobei der topfartige Einsatz eine Heizeinrichtung umfasst, und der Vorratsbehälter einen Entnahmeraum aufweist, welcher über Öffnungen mit dem Innenraum des Vorratsbehälters in Verbindung steht, wobei der Füllstanssensor außerhalb des Entnahmeraus angeordnet ist. Mit der Heizeinrichtung kann erforder lichenfalls der gefrorene Wirkstoff auf getaut oder ein Gefrieren überhaupt verhindert werden.

In nochmaliger Weiterbildung hierzu wird vorgeschlagen, dass die Aufnahmeöffnung an einem Rand des topfartigen Einsatzes ausgebildet ist, sich in normaler Betriebslage des Vorratsbehälters wenigstens im Wesentlichen vertikal erstreckt und zur Seite hin geschlossen, aber nach unten offen ist. Hierdurch wird ein besonders zuverlässiger Schutz vor Schlägen durch abbrechendes Eis geschaffen, bei gleichzeitig zuverlässiger Erfassung des Füllstandes.

Besonders vorteilhaft ist es, wenn der Füllstandssensor aus einem Satz von Füllstandssensoren ausgewählt ist, wobei die Füllstandssensoren eines Satzes gleiche Befestigungseinrichtungen zur Befestigung am topfartigen Einsatz und/oder mindestens abschnittsweise gleiche Außenform, jedoch unterschiedliche funktionale Eigenschaften aufweisen. Die Erfindung schafft also ein modulares System, welches eine hohe Vereinheitlichung der Komponenten und der Fertigungsprozesse und damit eine Reduktion der Fertigungs- und Montagekosten ermöglicht.

In Weiterbildung hierzu wird vorgeschlagen, dass ein Satz von Füllstandssensoren mindestens einen Mehrstufensensor und einen kontinuierlich messenden Sensor umfasst. Während der kontinuierliche Füllstandssensor über die gesamte Füllhöhe des Vorratsbehälters messen kann, erfasst der Mehrstufensensor, beispielsweise ein Zwei- oder Dreistufensensor, nur jeweilige diskrete Positionen, beispielsweise eine maximale und eine minimale Füllhöhe. Damit können unterschiedliche Anforderungen an die Füllstandsmessung ohne weiteres erfüllt werden, ohne dass Änderungen am Vorratsbehälter oder dem topfartigen Einsatz selbst erforderlich sind.

Als Mehrstufensensor kann beispielsweise ein solcher Sensor verwendet werden, der mindestens drei lediglich an ihrem abragenden Ende freie Leiter umfasst, wobei die freien Enden auf unterschiedlichen Höhen des Vorratsbehälters angeordnet sind. Ein solcher Mehrstufensensor baut sehr einfach und damit preiswert, und er ist gleichzeitig robust.

Ein kontinuierlich messender Füllstandssensor kann einen piezoelektrischen Ultraschallgeber und -sensor umfassen, die beispielsweise in einem L-förmigen Kunststoffrohr angeordnet sind. Die vom Ultraschallgeber emittierten Schallwellen werden an der Oberfläche des Wirkstoffes reflektiert und vom Ultraschallsensor erfasst. Aus der Laufzeit kann dann der Füllstand ermittelt werden.

Gleiche Anschlüsse eines Satzes von Füllstandssensoren vereinfachen nochmals die mechanische und/oder elektrische Montage der SCR-Vorrichtung.

Besonders bevorzugt ist es, wenn ein Satz von Füllstandssensoren einen integrierten, vorzugsweise eingespritzten Temperatursensor umfasst. Dies erleichtert nochmals die Montage, da die Handhabung eines zusätzlichen separaten Teils entfällt.

Der Füllstandssensor ist günstigerweise wenigstens in etwa in einer Mitte des Vorratsbehälters angeordnet. Die Einflüsse des Schwappens des im Vorratsbehälter bevorrateten Wirkstoffes sind nämlich in der Mitte des Vorratsbehälters am geringsten, dort kann der Füllstand also mit besonders hoher Genauigkeit erfasst werden.

Da üblicherweise auch der Abfluss des Wirkstoffes aus dem Vorratsbehälter von dessen Mitte aus erfolgt, ist es am besten, wenn sowohl die Heizeinrichtung als auch der Füllstandssensor mit dem Temperatursensor (welcher zur Steuerung der Heizeinrichtung verwendet wird) in der Mitte des Vorratbehälters angeordnet sind. Dies ist dank der modularen und platzsparenden Bauweise, die die vorliegende Erfindung vorschlägt, besonders gut realisierbar.

Der Temperatursensor, der oben angesprochen wurde, ist vorzugsweise von der Heizeinrichtung beabstandet. Dies verhindert, dass die gemessene Temperatur durch den Betrieb der Heizeinrichtung verfälscht wird.

### Kurze Beschreibung der Zeichnungen

Nachfolgend werden Ausführungsbeispiele der vorliegenden Erfindung unter Bezugnahme auf die beiliegende Zeichnung näher erläutert. In der Zeichnung zeigen:
- Figur 1: eine schematische Darstellung einer Brennkraftmaschine mit einer SCR-Vorrichtung:
- Figur 2: einen Teilschnitt durch einen Vorratsbehälter der SCR-Vorrichtung von Figur 1;
- Figur 3: einen schematischen Schnitt durch einen Füllstandssensor, der in den Vorratsbehälter von Figur 2 eingebaut ist; und
- Figur 4: einen schematischen Schnitt durch eine alternative Ausführungsform eines Füllstandssensors.

### Ausführungsformen der Erfindung

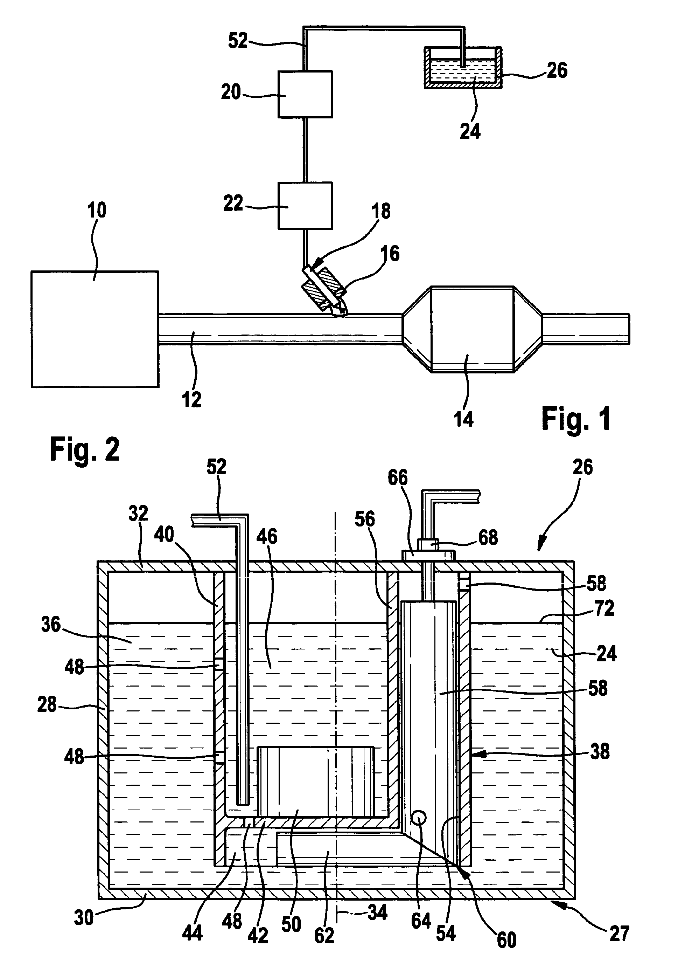

Eine Brennkraftmaschine ist in Figur 1 symbolisch dargestellt und mit dem Bezugszeichen 10 versehen. Heißes Abgas wird durch ein Abgasrohr 12 einem SCR-Katalysator 14 zugeführt. Stromaufwärts von diesem ist an das Abgasrohr 12 ein Flansch 16 angeformt, an dem eine SCR-Injektionseinrichtung 18 befestigt ist. Über eine Pumpe 20 und eine Ventileinrichtung 22 wird als Wirkstoff eine Harnstoff Wasser-Lösung 24, die in einem Vorratsbehälter 26 bevorratet ist, der SCR-Injektionseinrichtung 18 zugeführt.

Wird im Betrieb der Brennkraftmaschine 10 die Harnstoff Wasser-Lösung 24 von der SCR-Injektionseinrichtung 18 in das im Abgasrohr 12 strömende Abgas als feiner Spray eingespritzt, entsteht aus einer Reaktion des Harnstoffs mit dem Wasser Ammoniak, welches anschließend im SCR-Katalysator durch selektive katalytische Reduktion mit Stickstoffmonoxid und Stickstoffdioxid zu molekularem Stickstoff und Wasser umgewandelt wird.

Der Vorratsbehälter 26 ist in Figur 2 stärker im Detail dargestellt. Er umfasst ein Gehäuse 27, welches als zylindrisches geschlossenes Teil mit einer Umfangswand 28, einem Boden 30 und einem Deckel 32 ausgeführt ist und eine Mittelachse 34 hat. Umfangswand 28, Boden 30 und Deckel 32 des Vorratsbehälters 26 begrenzen einen Innenraum 36, in dem ein topfartiger Einsatz 38 angeordnet ist. Letzterer ist ebenfalls als rotationssymmetrisches kreiszylindrisches Teil ausgeführt, mit einer Umfangswand 40 und einem Boden 42. Der in Figur 2 obere Rand der Umfangswand 40 ist am Deckel 32 des Vorratsbehälters 26 befestigt. Die Mittelachse des topfartigen Einsatzes 38 fällt mit der Mittelachse 34 des Vorratsbehälters 26 zusammen. Die Umfangswand 40 erstreckt sich in Figur 2 nach unten etwas über den Boden 42 hinaus. Hierdurch wird ein nach oben vom Boden 42 und nach radial außen von der Umfangswand 40 begrenzter, jedoch nach unten offener Aufnahmeraum 44 geschaffen, auf dessen Bedeutung noch weiter unten im Detail eingegangen wird.

Oberhalb des Bodens 42 des topfartigen Einsatzes 38 wird von dem Boden 42 und der Umfangswand 40 ein Entnahmeraum 46 begrenzt. Dieser steht über Öffnungen 48 mit dem Innenraum 36 des Vorratsbehälters 26 in Verbindung. Auf dem Boden 42 ist eine Heizeinrichtung 50 angeordnet, die beispielsweise eine elektrische Widerstandsheizung umfasst. Von oben her erstreckt sich durch den Deckel 32 in den Entnahmeraum 46 hinein bis in einen Bereich zwischen Heizeinrichtung 50 und Umfangswand 40 des topfartigen Einsatzes 38 eine Entnahmeleitung 52, die zur Pumpe 20 führt.

Der topfartige Einsatz 38 weist eine Aufnahmeöffnung 54 auf, die zwischen der Umfangswand 40 und einer Begrenzungswand 56 der Aufnahmeöffnung 54 gebildet ist. Wie aus Figur 2 ersichtlich ist, erstreckt sich die Aufnahmeöffnung 54 in der dort gezeigten normalen Betriebslage des Vorratsbehälters 26 im wesentlichen vertikal. Sie ist durch die Begrenzungswand 56 und die Umfangswand 40 zur Seite hin geschlossen, jedoch nach unten, zum Aufnahmeraum 44 und damit zum Innenraum 36 des Vorratsbehälters 26 hin offen. Über eine Öffnung 58 im Bereich ihres oberen Endes kommuniziert die Aufnahmeöffnung 54 zusätzlich mit dem Innenraum 36.

In die Aufnahmeöffnung 54 ist ein erster Schenkel 58 eines L-förmig ausgebildeten Füllstandssensors 60 eingeführt, wobei zwischen Füllstandssensor 60 und der Begrenzungswand 56 beziehungsweise der Umfangswand 40 ein geringer Spalt (ohne Bezugszeichen) vorhanden ist. Der zweite Schenkel 62 des Füllstandssensors 60 erstreckt sich im Wesentlichen horizontal in den Aufnahmeraum 40 hinein. Die Schenkel 58 und 62 des Füllstandssensors 60 sind aus Kunststoff. Ein Temperatursensor 64, beispielsweise ein NTC-Widerstandssensor, ist in den Schenkel 58 eingespritzt, der Temperatursensor 64 ist also in den Füllstandssensor 60 integriert.

Am oberen Ende des ersten Schenkels 58 des Füllstandssensors 60 ist eine kombinierte mechanische und elektrische Befestigungseinrichtung 66 vorhanden, über die der Füllstandssensor 60 am Gehäuse 27 des Vorratsbehälters 26 befestigt und hierdurch in der Aufnahmeöffnung 54 des topfartigen Einsatzes 38 festgelegt ist. Über die Befestigungseinrichtung 66 werden auch die Anschlussleitungen für den Füllstandssensor 60 und den Temperatursensor 64 aus dem Vorratsbehälter 26 herausgeführt. An der Befestigungseinrichtung 66 ist eine standardisierte elektrische Anschlussbuchse 68 angeordnet, über die der Füllstandssensor 60 und der Temperatursensor 64 an eine Fahrzeugelektrik angeschlossen werden können.

Man erkennt aus Figur 2, dass der Füllstandssensor 60 zur Mitte (Mittelachse 34) des Vorratsbehälters 26 hin angeordnet ist. Gleiches gilt für den Temperatursensor 64 und die Heizeinrichtung 50. Dabei hat der Temperatursensor 64 jedoch einen gewissen Abstand zur Heizeinrichtung 50.

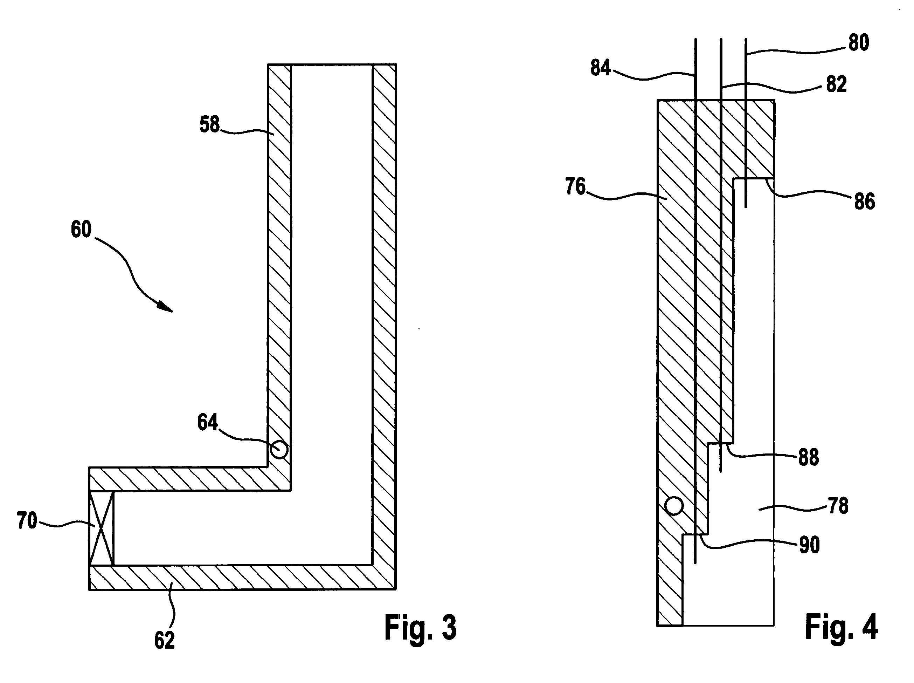

Wie aus Figur 3 ersichtlich ist, handelt es sich bei dem Füllstandssensor 60 um einen kontinuierlich messenden Füllstandssensor, der als L-förmiges Rohr mit einem an einem Ende angeordneten piezoelektrischen kombinierten Ultraschallgeber und -sensor 70 ausgebildet ist. Letzterer sendet im Betrieb Schallwellen aus, die an der Oberfläche (Bezugszeichen 72 in Figur 2) der im Vorratsbehälter 26 bevorrateten Harnstoff-Wasser-Lösung 24 reflektiert werden (diese Oberfläche 72 ist nach dem Prinzip der miteinander kommunizierenden Röhren auch innerhalb des Schenkels 58 vorhanden; hierzu verfügt der Füllstandssensor über entsprechende, nicht dargestellte Öffnungen). Die reflektierten Schallwellen werden wiederum von dem piezoelektrischen kombinierten Ultraschallgeber und -sensor 70 erfasst, und aus der Laufzeit wird dann von einer nicht dargestellten Auswerteelektronik der entsprechende Füllstand, also die Höhe der Flüssigkeitsoberfläche 72 über dem Boden 30 oder 42, ermittelt.

Im Betrieb der Brennkraftmaschine 10 dient der topfförmige Einsatz 38 dazu, den Einfluss der Schwappbewegungen der Harnstoff-Wasser-Lösung 24 auf die Entnahme mittels der Entnahmeleitung 52 zu vermindern. Da die Harnstoff Wasser-Lösung 24 bei einer Temperatur unterhalb von -11°C gefriert, wird, wenn dies vom Temperatursensor 64 erkennt wird, die Heizeinrichtung 50 eingeschaltet. Durch die mittige und in der Nähe zum Ende der Entnahmeleitung 52 liegende Anordnung des Temperatursensors 64 wird ein Unterschreiten der kritischen Temperatur im Bereich des Endes der Entnahmeleitung 52 zuverlässig erfasst, wobei wiederum durch den Abstand zwischen dem Temperatursensor 64 zu der Heizeinrichtung 50 eine Verfälschung der erfassten Temperatur reduziert oder sogar ganz verhindert wird.

Durch die vergleichsweise mittige Anordnung des Füllstandssensors 60 werden Einflüsse des Schwappens der Harnstoff-Wasser-Lösung 24 auf den erfassten Füllstand reduziert. Da die Heizeinrichtung 50 die Harnstoff Wasser-Lösung 24 vorwiegend im Bereich des topfartigen Einsatzes 38 erwärmt, kann es vorkommen, dass zwischen dem Gehäuse 27 und dem topfartigen Einsatz 38 Eisstücke vorhanden sind. Durch die Anordnung des zweiten Schenkels 62 innerhalb des Aufnahmeraums 44 und des ersten Schenkels 58 in der Aufnahmeöffnung 54 ist der Füllstandssensor 60 zuverlässig vor Schäden durch schlagende Eisstücke geschützt.

Wie nun unter zusätzlicher Bezugnahme auf Figur 4 erläutert werden wird, ist der Füllstandssensor aus einem Satz von Füllstandssensoren ausgewählt, welche alle gleiche Anschluss- beziehungsweise Befestigungseinrichtungen zur Befestigung am topfartigen Einsatz 38, und auch mindestens einen Abschnitt aufweisen, dessen Außenform identisch ist zu dem ersten Schenkel 58 des in den Figuren 2 und 3 gezeigten Füllstandssensors 60. Die Füllstandssensoren eines Satzes haben jedoch unterschiedliche funktionale Eigenschaften. Der in Figur 4 dargestellte Füllstandssensor 74 ist beispielsweise als Mehrstufensensor, vorliegend als Drei-Stufensensor ausgebildet. Er umfasst einen kreiszylindrischen Träger 76, der die gleiche Außenkontur aufweist wie der erste Schenkel 58 des Füllstandssensors 60. In den Träger 76 ist von der Unterseite her ein gestufter Schlitz 78 eingebracht. In den Träger 76, der vorzugsweise aus Kunststoff hergestellt ist, sind drei elektrisch leitende Drähte, die aus Edelstahl hergestellt sind, eingespritzt. Diese tragen in Figur 4 die Bezugszeichen 80, 82 und 84. Der Draht 80 tritt als freier Leiter im Bereich eines obersten Absatzes 86 des Schlitzes 78 aus dem Träger 76 hervor. Der Draht 82 steht als freier Leiter etwas über einen mittleren Absatz 88 des Schlitzes 78 hervor, und der Draht 84 steht als freier Leiter etwas über einen in Figur 4 unteren Absatz 90 des Schlitzes 78 hervor.

Über den Schlitz 78 können die abragenden freien Enden der Drähte 80 bis 84, je nach Höhe der Flüssigkeitsoberfläche 72, in die Harnstoff-Wasser-Lösung 24 eingetaucht sein oder auch nicht. Im Betrieb wird auf die Drähte 80 bis 84 ein geringer Strom gegeben. Sind alle abragenden freien Enden der Drähte 80 bis 84 in die Harnstoff-Wasser-Lösung 24 eingetaucht, so kann aus der an allen Drähten 80 bis 84 feststellbaren Leitfähigkeit der Harnstoff-Wasser-Lösung 24 auf zwei zuvor definierte Höhen der Flüssigkeitsoberfläche 72 geschlossen werden. Kommt ein abragendes freies Ende eines Drahtes 80 bis 84 außerhalb der Harnstoff-Wasser-Lösung 24 zu liegen, so ist an diesem Draht keine Leitfähigkeit feststellbar, das heißt, dass der zu diesem Draht 80 bis 84 gehörende Füllstand unterschritten ist.

## Patentansprüche

1. SCR-Vorrichtung zur selektiven katalytischen Reduktion des Abgases einer Brennkraftmaschine (10), mit einem Vorratsbehälter (26) für einen Wirkstoff (24) mit einem Füllstandssensor (60; 74), der den Füllstand (72) des Wirkstoffs (24) erfasst, und einem topfartigen Einsatz (38), der in dem Vorratsbehälter (26) angeordnet ist und ein Schwappen des Wirkstoffs (24) vermindert, wobei der Füllstandssensor (60; 74) am topfartigen Einsatz (38) angeordnet ist, und wobei der topfartige Einsatz (38) eine zum Vorratsbehälter (26) hin offene Aufnahmeöffnung (54) aufweist, in der der Füllstandssensor (60; 74) aufgenommen ist, **dadurch gekennzeichnet dass** der Vorratsbehälter (26) einen Innenraum (36) aufweist, in dem der topfartige Einsatz (38) angeordnet ist, wobei der topfartige Einsatz (38) eine Heizeinrichtung (50) umfasst, und der Vorratsbehälter (26) einen Entnahmeraum (46) aufweist, welcher über Öffnungen (48) mit dem Innenraum (36) des Vorratsbehälters (26) in Verbindung steht, wobei der Füllstandssensor (60) außerhalb des Entnahmeraums (46) angeordnet ist.

2. SCR-Vorrichtung nach Anspruch 1, **dadurch gekennzeichnet, dass** die Aufnahmeöffnung (54) an einem Rand des topfartigen Einsatzes (38) ausgebildet ist, sich in normaler Betriebslage des Vorratsbehälters (26) wenigstens im Wesentlichen vertikal erstreckt und zur Seite hin geschlossen aber nach unten offen ist.

3. SCR-Vorrichtung nach Anspruch 2, **dadurch gekennzeichnet, dass** der Füllstandssensor aus einem Satz von Füllstandssensoren (60; 74) ausgewählt ist, wobei die Füllstandssensoren (60; 74) eines Satzes gleiche Befestigungseinrichtungen (66) zur Befestigung am topfartigen Einsatz (38) und/oder zumindest abschnittsweise gleiche Außenform, jedoch unterschiedliche funktionale Eigenschaften aufweisen.

4. SCR-Vorrichtung nach Anspruch 3, **dadurch gekennzeichnet, dass** ein Satz von Füllstandssensoren mindestens einen Mehrstufensensor (74) und einen kontinuierlich messenden Sensor (60) umfasst.

5. SCR-Vorrichtung nach Anspruch 4, **dadurch gekennzeichnet, dass** der Mehrstufensensor (74) mindestens drei lediglich an ihrem abragenden Ende freie Leiter (80 - 84) umfasst, wobei die abragenden Enden auf unterschiedlichen Höhen (86 - 90) des Vorratsbehälters (26) angeordnet sind.

6. SCR-Vorrichtung nach Anspruch 4, **dadurch gekennzeichnet, dass** der kontinuierlich messende Füllstandssensor (60) einen piezoelektrischen Ultraschallgeber und -sensor (70) oder einen kapazitiven Sensor umfasst.

7. SCR-Vorrichtung nach einem der Ansprüche 3 bis 6, **dadurch gekennzeichnet, dass** ein Satz von Füllstandssensoren (60; 74) gleiche Anschlüsse aufweist.

8. SCR-Vorrichtung nach einem der Ansprüche 3 bis 7, **dadurch gekennzeichnet, dass** ein Satz von Füllstandssensoren (60; 74) einen integrierten, vorzugsweise eingespritzten Temperatursensor (64) umfasst.

9. SCR-Vorrichtung nach einem der vorhergehenden Ansprüche, **dadurch gekennzeichnet, dass** der Füllstandssensor (60; 74) wenigstens in etwa in einer Mitte des Vorratsbehälters angeordnet ist.

10. SCR-Vorrichtung nach Anspruch 8, **dadurch gekennzeichnet, dass** der Temperatursensor (64) von der Heizeinrichtung (50) beabstandet ist.

## Claims

1. SCR device for the selective, catalytic reduction of the exhaust gas of an internal combustion engine (10), having a reservoir container (26) for an active substance (24) having a filling level sensor (60; 74) which detects the filling level (72) of the active substance (24), and a pot-like insert (38) which is arranged in the reservoir container (26) and reduces sloshing of the active substance (24), **characterized in that** the filling level sensor (60; 74) is arranged on the pot-like insert (38), wherein the pot-like insert (38) has a receptacle opening (54) which is open towards the reservoir container (26) and in which the filling level sensor (60; 74) is accommodated, **in that** the reservoir container (26) has an interior space (36) in which the pot-like insert (38) is arranged, wherein the pot-like insert (38) comprises a heating device (50), and the reservoir container (26) has an extraction space (46) which is connected to the interior space (36) of the reservoir container (26) via openings (48), wherein the filling level sensor (60) is arranged outside the extraction space (46).

2. SCR device according to Claim 1, **characterized in that** the receptacle opening (54) is formed on an edge of the pot-like insert (38), extends at least substantially vertically in the normal operating position of the reservoir container (26) and is closed towards the side but open in the downward direction.

3. SCR device according to Claim 2, **characterized in that** the filling level sensor is selected from a set of filling level sensors (60; 74), wherein the filling level sensors (60; 74) of one set have identical attachment devices (66) for attachment to the pot-like insert (38) and/or an exterior shape which is identical at least in certain sections, but different functional properties.

4. SCR device according to Claim 3, **characterized in that** a set of filling level sensors comprises at least one multi-stage sensor (74) and one continuously measuring sensor (60).

5. SCR device according to Claim 4, **characterized in that** the multi-stage sensor (74) comprises at least three free conductors (80-84) at the projecting end of said SCR device, wherein the projecting ends are arranged at different levels (86-90) of the reservoir container (26).

6. SCR device according to Claim 4, **characterized in that** the continuously measuring filling level sensor (60) comprises a piezo-electric ultrasonic sound generator and an ultrasonic sensor (70) or a capacitive sensor.

7. SCR device according to one of Claims 3 to 6, **characterized in that** a set of filling level sensors (60; 74) has identical connections.

8. SCR device according to one of Claims 3 to 7, **characterized in that** a set of filling level sensors (60; 74) comprises an integrated, preferably integrally injection-moulded, temperature sensor (64).

9. SCR device according to one of the preceding claims, **characterized in that** the filling level sensor (60; 74) is arranged at least approximately in the centre of the reservoir container.

10. SCR device according to Claim 8, **characterized in that** the temperature sensor (64) is spaced apart from the heating device (50).

## Revendications

1. Dispositif SCR pour la réduction catalytique sélective des gaz d'échappement d'un moteur (10) à combustion interne, le dispositif présentant
un récipient de réserve (26) pour une substance active (24),
une sonde de niveau (60; 74) qui détecte le niveau (72) de la substance active (24) et
une garniture (38) en forme de godet disposée dans le récipient de réserve (26) et diminuant les fluctuations de niveau de la substance active (24), **caractérisé en ce que**
la sonde de niveau (60; 74) est disposée sur la garniture (38) en forme de godet,
**en ce que** la garniture (38) en forme de godet présente une ouverture de reprise (54) ouverte en direction du récipient de réserve (26) et dans laquelle la sonde de niveau (60; 74) est reprise,
**en ce que** le récipient de réserve (26) présente un espace intérieur (36) dans lequel la garniture (38) en forme de godet est disposée,
**en ce que** la garniture (38) en forme de godet comporte un dispositif de chauffage (50),
**en ce que** le récipient de réserve (26) présente un espace de prélèvement (46) qui communique par des ouvertures (48) avec l'espace intérieur (36) du récipient de réserve (26) et
**en ce que** la sonde de niveau (60) est disposée à l'extérieur de l'espace de prélèvement (46).

2. Dispositif SCR selon la revendication 1, **caractérisé en ce que** l'ouverture de reprise (54) est formée sur un bord de la garniture (38) en forme de godet et s'étend au moins essentiellement à la verticale lorsque le récipient de réserve (26) est en position normale de fonctionnement est fermée latéralement mais ouverte vers le bas.

3. Dispositif SCR selon la revendication 2, **caractérisé en ce que** la sonde de niveau est sélectionnée dans un ensemble de sondes de niveau (60; 74), les sondes de niveau (60; 74) présentant pour la fixation sur la garniture (38) en forme de godet un jeu de dispositifs de fixation (66) identiques et/ou présentant au moins en partie la même forme extérieure mais des propriétés fonctionnelles différentes.

4. Dispositif SCR selon la revendication 3, **caractérisé en ce qu'**un jeu de sondes de niveau comporte au moins une sonde (74) à plusieurs étages et une sonde (60) mesurant en continu.

5. Dispositif SCR selon la revendication 4, **caractérisé en ce que** la sonde (74) à plusieurs niveaux comporte au moins trois conducteurs (80-84) libres uniquement à leur extrémité débordant vers le bas, les extrémités débordant vers le bas étant disposées à différentes hauteurs (86-90) dans le récipient de réserve (26).

6. Dispositif SCR selon la revendication 4, **caractérisé en ce que** la sonde de niveau (60) mesurant en continu comporte un émetteur-sonde (70) piézoélectrique à ultrasons ou une sonde capacitive.

7. Dispositif SCR selon l'une des revendications 3 à 6, **caractérisé en ce que** jeu les sondes de niveau (60; 74) d'un présentent les mêmes bornes de raccordement.

8. Dispositif SCR selon l'une des revendications 3 à 7, **caractérisé en ce qu'**un jeu de sondes de niveau (60; 74) comporte une sonde de température (64) intégrée et de préférence moulée par injection.

9. Dispositif SCR selon l'une des revendications précédentes, **caractérisé en ce que** la sonde de niveau (60; 74) est disposée au moins sensiblement au milieu du récipient de réserve.

10. Dispositif SCR selon la revendication 8, **caractérisé en ce que** la sonde de température (64) est maintenue à distance du dispositif de chauffage (50).
